# EUROPEAN PATENT SPECIFICATION

(11) **EP 3 117 697 B1**
(45) Date of publication and mention of the grant of the patent: **20.03.2019**
(21) Application number: 16179407.8
(22) Date of filing: 14.07.2016
(51) Int. Cl.: A01D 75/28, A01D 41/16

(54) **HEADER TILT MECHANISM**
ERNTEVORSATZNEIGUNGSMECHANISMUS
MÉCANISME D'INCLINAISON DE TÊTE DE MOISSONNEUSE

(30) Priority: 14.07.2015 BE 201505447
(43) Date of publication of application: 18.01.2017
(73) Proprietor: CNH Industrial Belgium nv, 8210 Zedelgem (BE)
(72) Inventor: Borry, Stijn, 8740 Pittem (BE); Naaktgeboren, Adrianus, 8490 Varsenare (BE); Van Haver, Ronald, 9220 Hamme (BE); Theunynck, Vincent, 8870 Izegem (BE); De Baets, Patrick, 9300 Aalst (BE)
(74) Representative: CNH Industrial IP Department

(56) References cited:
- WO-A2-2008/155582
- DE-A1- 4 105 260
- US-A1- 2014 171 163

## Description

### BACKGROUND OF THE INVENTION

The present invention relates to agricultural harvesters, and, more particularly, to the connection between the feeder housing and the header of agricultural harvesters.

Combines are used to harvest agricultural crops such as corn, soybeans, wheat and other grain crops. As the combine is driven through crop fields, the combine cuts the crop, separates the desired crop from the undesired waste, stores the crop, and discards the waste.

In a typical combine, a header is mounted to a face plate adjoining the feeder housing at the front of the combine to gather the crop and feed the crop into the combine for processing. As the combine is driven through the field, the crop material is collected by the header and deposited into a feeder housing. The crop material is then transported upwardly and into the combine by a feed elevator located within the feeder housing. The crop material then passes through a threshing and separating mechanism, which may include a rotor, a threshing concave, a rotor cage, and a separating grate. As crop material passes through the threshing and separating mechanism, the grain is separated from the stalk material, commonly referred to as material other than grain (MOG).

After passing through the threshing and separating assembly, the grain and MOG are deposited onto a grain cleaning system, which may include a plurality of adjustable cleaning sieves, often referred to as a chaffer sieve and a shoe sieve, and sometimes a pre-cleaning sieve. These sieves are typically reciprocated back and forth to separate the grain from the MOG. To further separate the grain from the MOG, a cleaning fan or blower blows air up through the cleaning sieves. This flow of air tends to blow the MOG, which is typically lighter than grain, rearwardly and out the back of the combine. Grain, which is heavier than MOG, is allowed to drop through the openings in the sieve.

The clean grain that falls through the cleaning sieves is deposited on a collection panel positioned beneath the cleaning sieves. The collection panel is angled so as to permit the grain to flow, under the influence of gravity, into an auger trough positioned along the lowermost edge of the collection panel. The auger trough is typically positioned near the forward end of the cleaning sieves and extends along the width of the sieves. The grain collected in the auger trough is then moved by an auger towards the side of the combine where it is raised by a grain elevator and deposited into a storage tank or grain tank.

In current combine designs, the header is often attached to a face plate, which is pivotally or moveably connected to the front of the feeder housing. The face plate often pivots about an upper face plate pivot, and uses sliding joints at each lower corner made up of bolts attached to the face plate that slide in slots in the front of the feeder housing. This connection in the prior art is generally unable to properly balance the header and suffers from the transmission of excessive forces from the face plate to the front of the feeder housing, and vice versa, due to friction at the sliding joints. This can result in uncontrolled, sometimes oscillating movements of the header giving a wavy stubble pattern. As header sizes and weights become greater, these and other problems exaggerate.

Various factors contribute to the problem. The first, as alluded to above, is an overly rigid attachment. The header can move with reference to the combine by way of hydraulic cylinders which serve to raise and lower the header. In some instances, additional hydraulic cylinders serve to forcibly tilt the header from side to side. However, there is no elastic movement possible between the combine and the header. Therefore, as the combine moves over uneven ground, combine movements are transmitted to the header, and magnified by the width of the header, resulting in the uneven stubble pattern mentioned. Even over relatively flat terrain at higher speeds, the combine makes oscillating roll movements on certain frequencies. Either way, the height control system, and tilt control system if applicable, is required to make adjustments more often than is desirable.

Another factor that contributes to the problem is tire flexibility. Each time the header is forcibly tilted, it has a moment of inertia that must be overcome. This results in a significant reaction force that is largely absorbed by the combine tires, which flex so that the combine itself tilts slightly in the opposite direction. After a short time lag, the combine and header reach an equilibrium, but not before creating unevenness in the stubble pattern. Friction between the face plate and the feeder housing can cause these adjustments to be more jerky or abrupt, resulting in sharper reaction forces, and greater perturbation of the header and combine system. This effect is further exaggerated on slopes where the combine may already lean over towards one side.

Another factor that contributes to the problem, both in instances wherein tilt cylinders are provided, and in instances where no tilt cylinders are provided, as alluded to previously, is friction between the face plate and the front of the feeder housing at the sliding joints. Usually, simple polymer strips are provided in order to reduce friction, with limited effect. Heavy headers and forceful forward motion causes a huge normal force on these polymer strips, resulting in large counteracting friction forces. In instances where tilt cylinders are provided, the tilt cylinders have to deliver additional force, resulting in delayed reaction of the header with the attendant unevenness in the stubble pattern. In instances where tilt cylinders are not provided, the header may not return completely to a neutral position, also resulting in unevenness in the stubble pattern.

The time lag introduced due to ineffectiveness of the prior art sliding joints may be exacerbated by the fact that the sliding bar or plate height control sensors measure the ground contours at a distance behind the cutter bar and not exactly under it. Another source of time lag may be in the control system itself. This, coupled with the time lag introduced by the ineffectiveness of the sliding joint, results in excess delay in application of a correction movement to the header. All of these contributors to an uneven stubble pattern further depend on such things as the speed of the combine, terrain circumstances, tire type, presence of lubrication, and preciseness of hydraulic and electrical systems.

Combine manufacturers have employed various techniques to limit the problem of uneven stubble pattern with limited success. DE 4105260 A1 describes an attachment for a combine harvester having a pivoting table or pick-up assembly. It is tilted by one or more drives, typically on a central axis, and the pick-up assembly comprises a quadrilateral linkage. One technique has been to use stiffer combine tires, or even tracks. Another technique has been to lighten the header using lighter materials or designs. For instance, a header that utilizes a draper is usually lighter than one that uses an auger. Another technique is to provide further flexibility within the header itself. Flexible headers may have a flexible cutter bar, or may be built up of several pivoting wings that can follow ground contours better than their rigid counterparts. Some manufacturers have employed gauge wheels to support the header directly from the ground. Often, some sort of suspension system is provided between the header and the combine, typically within an adaptor frame. However, these are typically overly complex, require extensive changes to the header, face plate, and/or feeder housing, and often suffer from the friction effects described above. Rollers may be used, but would be susceptible to contamination.

What is needed in the art is an improvement in the connection between the front of the feeder housing and the header that allows the header to follow ground contours without transmitting unwanted forces to the feeder housing, and which better isolates the header from movements of the combine. Further needed is an improvement that allows the header to tilt freely, so that no further time lag in applying corrective movements is caused by tilt cylinders having to overcome friction in the sliding joints, or in instances where no tilt cylinders are provided, that allows the header to return freely to a neutral position. Further needed is an improvement in the connection between the front of the feeder housing and the header that allows a header with gauge wheels to better respond to variations in terrain without transmitting excessive forces to the combine itself.

### SUMMARY OF THE INVENTION

The present invention provides such a connection between the front of the feeder housing and the header that allows the header to follow ground contours without transmitting unwanted forces to the feeder housing. The present invention allows the header to tilt freely without direct sliding contact, so that less hysteresis and time lag result in the header responding to corrective movements by the tilt cylinders if so provided, or in the header returning freely to a neutral position where no such tilt cylinders are provided. The present invention further allows a header having gauge wheels to follow variations in terrain without transmitting excessive forces to the combine.

The present invention may further provide heave and/or tilt cylinders having an accumulator or accumulators, or other type of actively or passively pressure controlling or limiting arrangement, in order to provide elastic compliance in the raising and tilting of the header, thus taking particular advantage of the freely moving connection between the front of the feeder housing and the header.

The invention is defined by an agricultural harvester according to claim 1. A header is provided for gathering a crop and feeding it into the agricultural harvester for processing. The header is connected to a feeder housing operable to move the crop from the header to the threshing and separating system, which feeder housing is also carried by the chassis. The header is connected to the feeder housing by way of the header tilt mechanism, which provides the header the ability to tilt in order to follow ground contours. The header tilt mechanism is movably attached to the feeder housing and to an attachment bracket connected to the header. The header tilt mechanism includes at least one straight line linkage movably connecting the attachment bracket on the header to the feeder housing, wherein the at least one straight line linkage is one of a "Robert's mechanism", a "Watt's linkage", a "Chebyshev linkage", and a "Peaucellier-Lipkin linkage".

An advantage of the present invention is that sliding contact directly between the pitch plate at the front of the feeder housing and the face plate to which the header mounts is eliminated. As a result, the transmission of excessive forces is minimized between the header and the combine itself. In this way, the rolling movements of the combine do not perturb the header and vice versa, where the arrangement is not provided with tilt cylinders, and the tilt cylinders can more readily adjust the tilt of the header with less reaction forces where the arrangement is so provided. Further, where the header is provided with gauge wheels and/or the heave and/or tilt cylinders are provided with an accumulator or accumulators, or other type of actively or passively pressure controlling or limiting arrangement, the header is better able to follow variations in terrain without transmitting excessive forces and therefore interacting with the roll dynamics of the combine itself.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side view of an embodiment of an agricultural harvester according to the present invention;
Fig. 2 is an isometric view of a sliding joint portion of a header tilt mechanism according to the prior art;
Fig. 3 is a front view of a header tilt mechanism according to a representative embodiment of the invention;
Fig. 4 is another front view of a header tilt mechanism according to a representative embodiment of the invention;
Fig. 5 is an isometric view of a straight line linkage portion of a header tilt mechanism according to a representative embodiment of the invention;
Fig. 6 is another isometric view of a straight line linkage portion of a header tilt mechanism according to a representative embodiment of the invention;
Fig. 7 is another isometric view of a straight line linkage portion of a header tilt mechanism according to a representative embodiment of the invention;
Fig. 8 is a front view of a straight line linkage portion of a header tilt mechanism according to a representative embodiment of the invention;
Fig. 9 is another isometric view of a straight line linkage portion of a header tilt mechanism according to a representative embodiment of the invention;
Fig. 10 is another front view of a straight line linkage portion of a header tilt mechanism according to a representative embodiment of the invention;
Fig. 11 is an isometric view of a straight line linkage according to a representative embodiment of the invention;
Fig. 12 is another isometric view of a straight line linkage according to a representative embodiment of the invention;
Fig. 13 is a normal view of a straight line linkage according to a representative embodiment of the invention;
Fig. 14 is another normal view of a straight line linkage according to a representative embodiment of the invention;
Fig. 15A is a partial side view of a header connected to a feeder housing by way of an alternative embodiment of a straight line linkage;
Fig. 15B is a partial side view of a header connected to a feeder housing by way of another alternative embodiment of a straight line linkage; and
Fig. 15C is a partial side view of a header connected to a feeder housing by way of another alternative embodiment of a straight line linkage.

Corresponding reference characters indicate corresponding parts throughout the several views. The exemplification set out herein illustrates one embodiment of the invention and such exemplification is not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

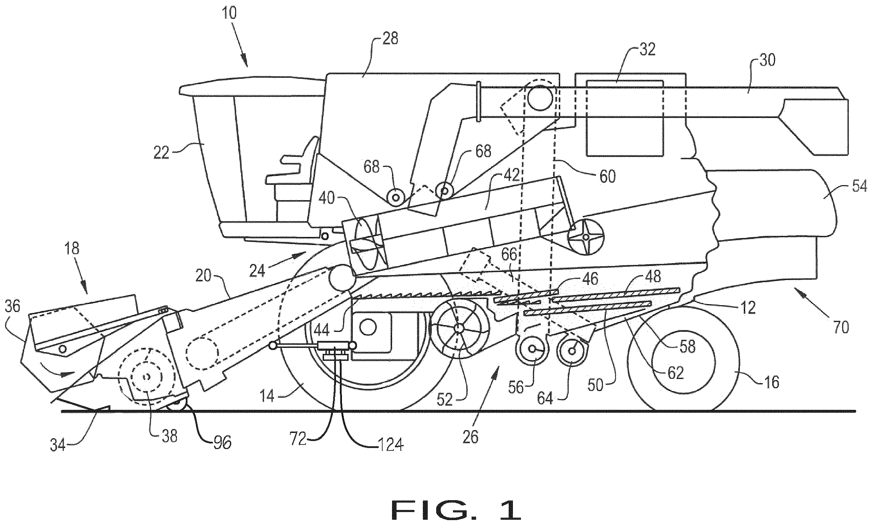

Referring now to the drawings, and more particularly to Fig. 1, there is shown an agricultural harvester in the form of a combine 10, which generally includes a chassis 12, ground engaging wheels 14 and 16, a header 18 with gauge wheels 96, a feeder housing 20, an operator cab 22, a threshing and separating system 24, a grain cleaning system 26, a grain tank 28, and an unloading auger 30. It should be appreciated that while the agricultural harvester is shown as combine 10, the agricultural harvester according to the present invention can be any type of construction that allows for crop material to be harvested such as a conventional combine (which does not have a rotor), rotary combine, hybrid combine, chopper harvester, etc.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, is also to be understood that combine 10 may include tracks, such as full tracks or halftracks. Header 18 is mounted to the front of combine 10 and includes a cutter bar 34 for severing crops from a field during forward motion of combine 10. A rotatable reel 36 feeds the crop into header 18, and an auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders 72, known as heave cylinders.

Threshing and separating system 24 may include a rotor 40 and a perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42. Grain which has been separated by the rotor 40 and perforated concaves 42 falls onto a main grain pan 44 and is conveyed toward grain cleaning system 26. Grain cleaning system 26 may include an optional pre-cleaning sieve 46, an upper sieve 48 (also known as a chaffer sieve), a lower sieve 50 (also known as a shoe sieve), and a cleaning fan 52. Grain on sieves 46, 48 and 50 is subjected to a cleaning action by fan 52 which provides an airflow through the sieves to remove chaff and other impurities from the grain by making this material airborne for discharge from straw hood 54 of combine 10. Main grain pan 44 and pre-cleaning sieve 46 oscillate or reciprocate to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of lower sieve 50. Clean grain auger 56 receives clean grain from each sieve 48, 50 and from bottom pan 58 of grain cleaning system 26. Clean grain auger 56 conveys the clean grain laterally to a generally vertically arranged grain elevator 60 for transport to grain tank 28. Tailings from grain cleaning system 26 fall to a tailings auger on 62. The tailings are transported via tailings auger 64 and return auger 66 to the upstream end of grain cleaning system 26 for repeated cleaning action. A pair of grain tank augers 68 at the bottom of grain tank 28 convey the clean grain laterally within grain tank 28 to unloading auger 30 for discharge from combine 10. The non-grain crop material proceeds through a residue handling system 70. Residue handling system 70 may include a chopper, counter knives, a windrow door and a residue spreader.

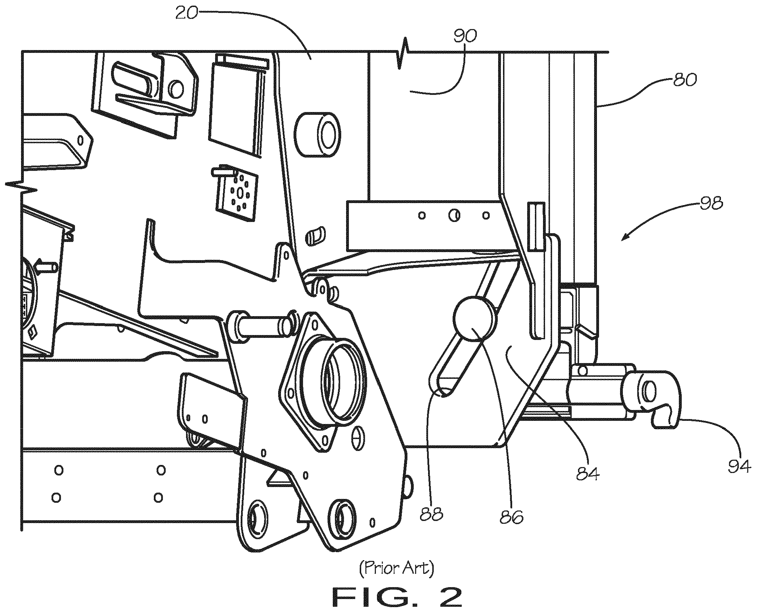

Referring now to Fig. 2, a prior art sliding joint 84 is shown, which is part of the overall header tilt mechanism 98, the full extent of which will become apparent in subsequent figures. The front of feeder housing 20 is provided with a pitch plate 90, which defines a generally planar front portion of the feeder housing 20. A sliding joint bolt 86 moves in a sliding joint slot 88, allowing face plate 80 to rotate about an upper face plate pivot axle 82 (not shown in Fig. 2). Because sliding joint 84 relies on sliding contact, it tends to produce excessive friction and is subject to the effects of contamination. A lock device 94 is provided for attaching the face plate 80 to the header 18 (not shown in Fig. 2).

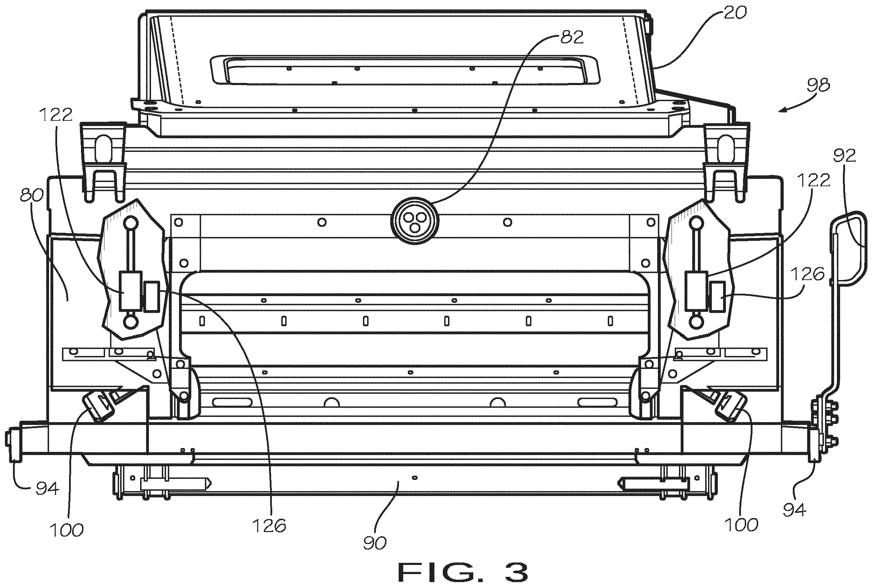

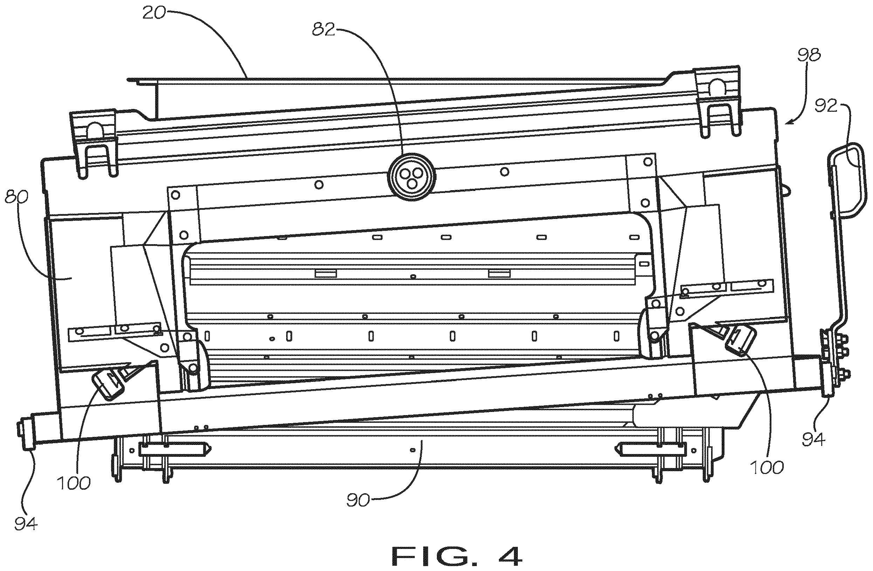

Referring now to Figs. 3 and 4, a header tilt mechanism 98 according to one embodiment of the present invention is shown. The front of feeder housing 20 terminates in a pitch plate 90, which again defines a generally planar front portion of the feeder housing 20. A face plate 80 rotates about upper face plate pivot axle 82 and is provided with a lock lever 92 and lock devices 94 useful for attaching face plate 80 to the header 18 (not shown in Figs. 3 and 4). The header tilt mechanism 98 shown in Fig. 3 is shown level with the feeder housing 20 of combine 10, whereas the header tilt mechanism 98 shown in Fig. 4 is shown tilted. Straight line linkages 100 according to an embodiment of the present invention are located at the bottom corners of pitch plate 90 and face plate 80, thereby movably connecting pitch plate 90 and face plate 80 while keeping pitch plate 90 and face plate 80 at a consistent distance from each other. The form and function of straight line linkages 100 are shown in greater detail in subsequent figures.

Tilt cylinders 122 may be used to forcibly tilt header tilt mechanism 98, which tilt cylinders 122 may be provided with an accumulator or accumulators 126, or other type of actively or passively pressure controlling or limiting arrangement, in order to provide elastic compliance in the tilting of header tilt mechanism, especially in an embodiment wherein the header 18 is provided with gauge wheels 96. The aforementioned hydraulic heave cylinders 72 used to raise and lower the feeder housing 20 may be similarly equipped with an accumulator or accumulators 124, or other type of actively or passively pressure controlling or limiting arrangement. In this way, the combine still carries a large part of the weight of the header and partially determines the header's tilted position, but allows the header to autonomously follow terrain contours.

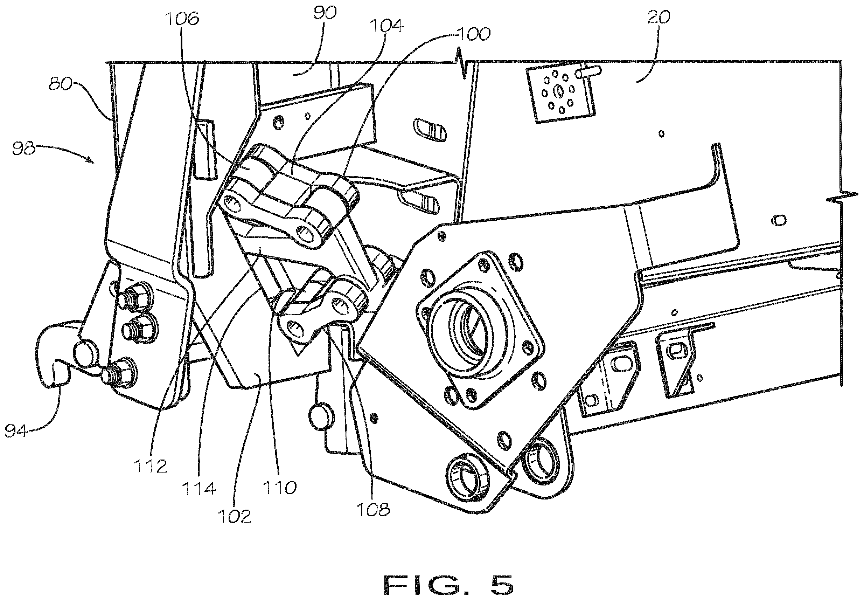

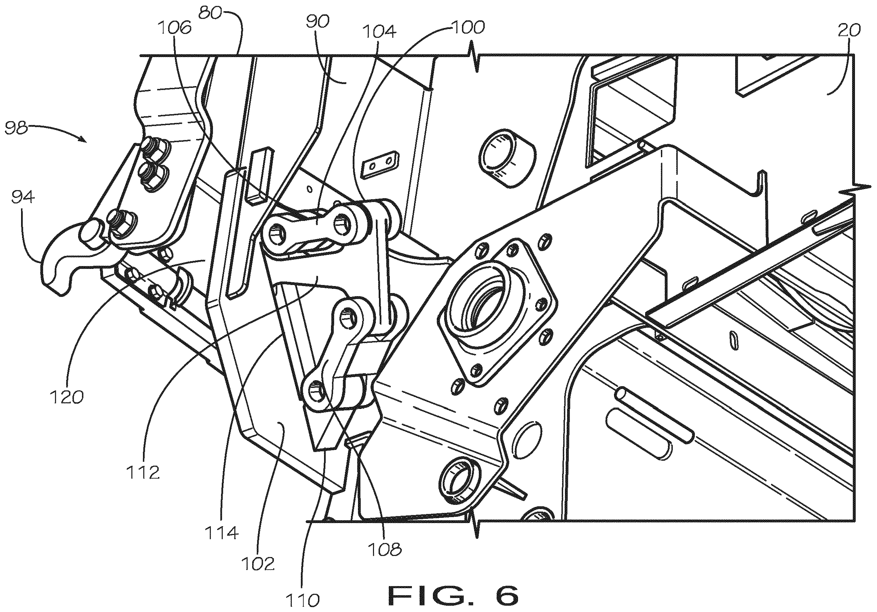

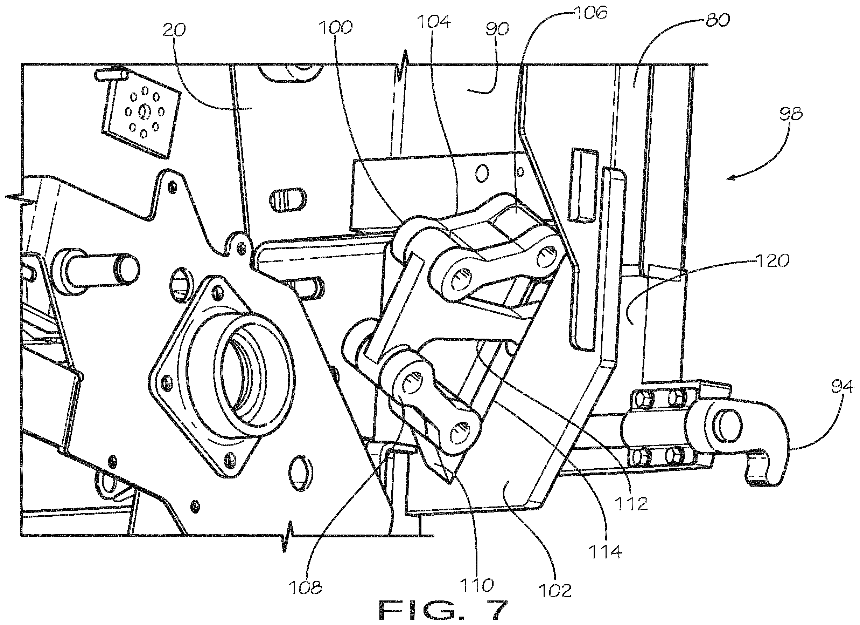

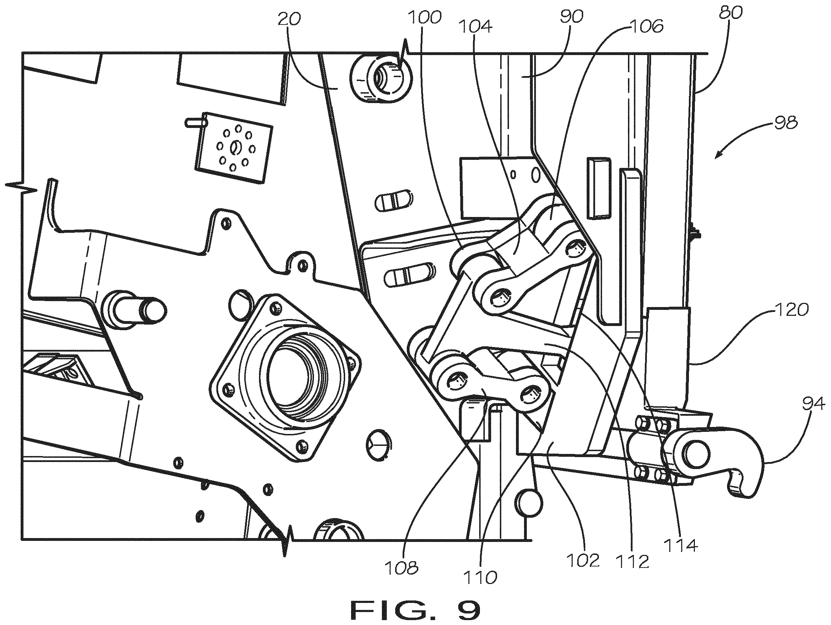

Turning now to Figs. 5, 6, 7, and 9, several generally rear isometric views of straight line linkage 100 of header tilt mechanism 98 are shown. The front of feeder housing 20 again terminates in a pitch plate 90 and face plate 80 rotates about upper face plate pivot axle 82 (not shown in Figs. 5, 6, 7, and 9). Face plate 80 is again provided with a lock device 94 useful for attaching face plate 80 to the header 18 (not shown in Figs. 5, 6, 7, and 9). Straight line linkage 100 is provided with an upper radius link 104, a lower radius link 108, and a T-link 112. Upper radius link 104 connects T-link 112 to an upper radius link mounting point 106 on pitch plate linkage mounting bracket 102. Lower radius link 108 connects T-link 112 to a lower radius link mounting point 110 on pitch plate linkage mounting bracket 102. T-link 112 passes through T-link slot 114 in pitch plate linkage mounting bracket 102 and connects with a face plate linkage attachment bracket 120 in a manner that will be illustrated in further detail in subsequent figures. The straight line linkage 100 of header tilt mechanism 98 is shown in Figs. 5 and 7 in a generally neutral level position, whereas the straight line linkage 100 of header tilt mechanism 98 shown in Figs. 6 and 9 is shown in a tilted position.

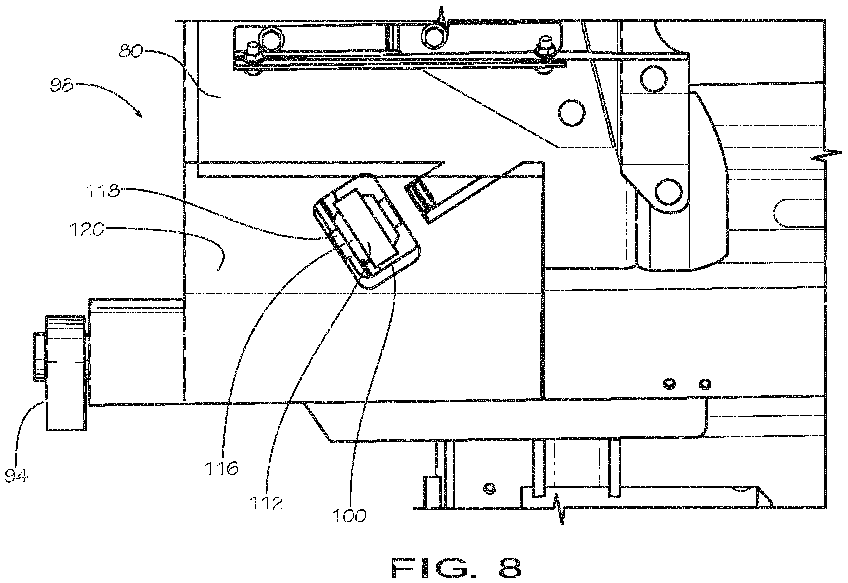

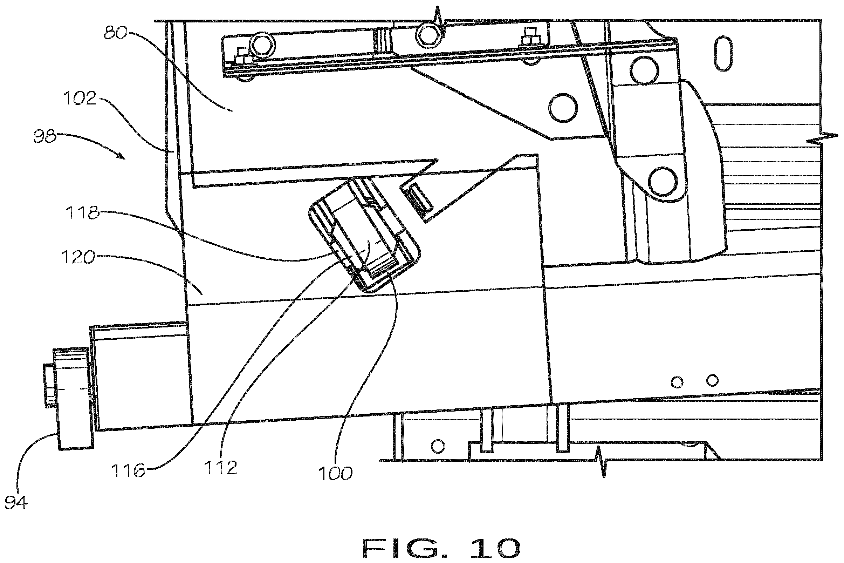

Turning now to Figs. 8 and 10, straight line linkage 100 of header tilt mechanism 98 is shown from the front. T-link 112 is shown to be engaged with face plate linkage attachment bracket 120, which is attached to face plate 80. Pitch plate linkage mounting bracket 102 is partially visible in Fig. 10, but the remainder of straight line linkage 100 is generally obscured. T-link 112 is engaged with face plate linkage attachment bracket 120 by way of sliding ball joint 116 and linkage axle 118. Face plate 80 is again provided with lock device 94.

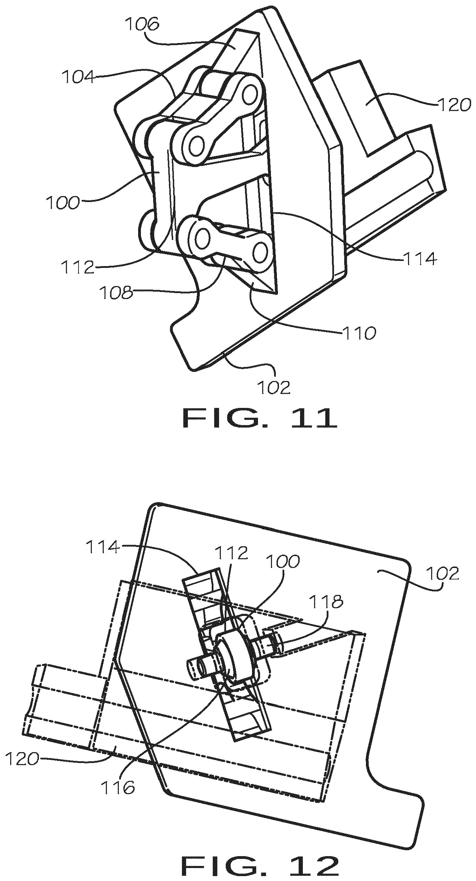

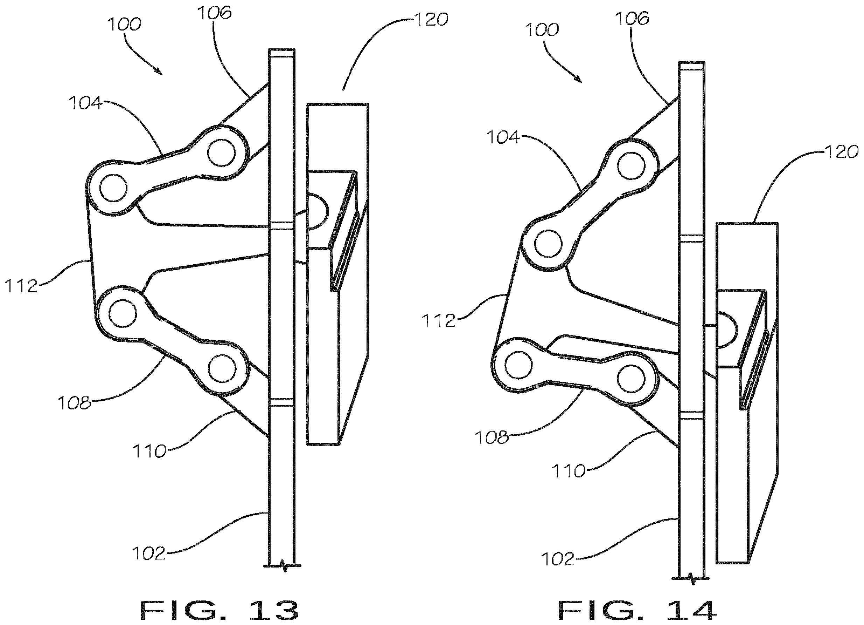

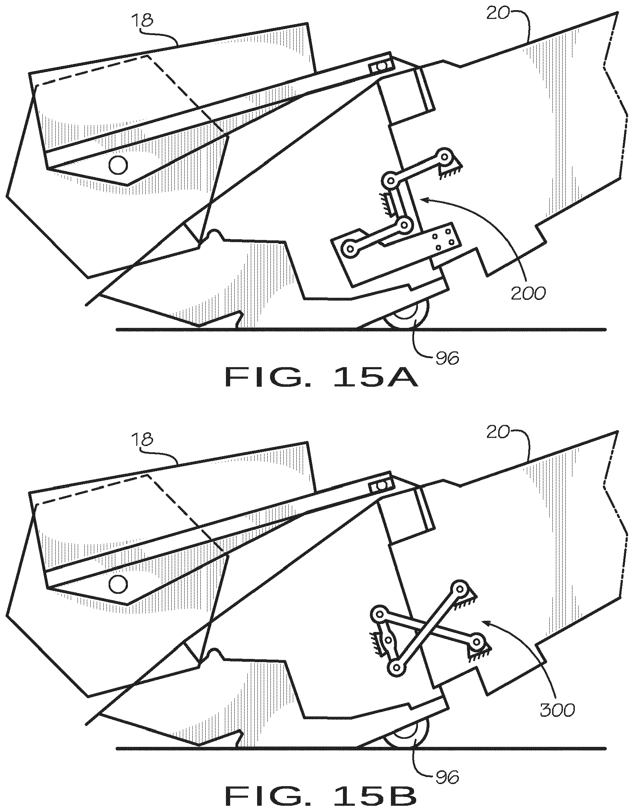

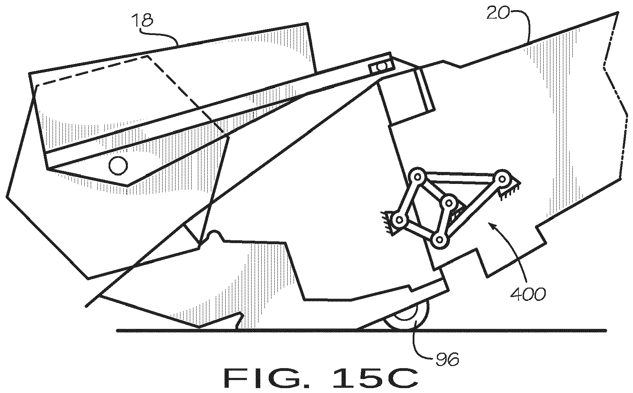

Turning now to Figs. 11 through 14, the form and function of straight line linkage 100 are shown in greater particularity. Together, upper radius link 104, lower radius link 108, T-link 112, upper radius link mounting point 106 on pitch plate linkage mounting bracket 102, lower radius link mounting point 110 on pitch plate linkage mounting bracket 102, and pitch plate linkage mounting bracket 102 itself define a straight line linkage of the type known as a "Robert's mechanism." Other straight line linkages are contemplated, such as a "Watt's linkage" 200, a "Chebyshev linkage" 300, or a "Peaucellier-Lipkin linkage" 400 as shown in Figs. 15A, 15B, and 15C, respectively. For the sake of simplicity, the "Robert's mechanism" type of straight line linkage 100 is illustrated in Figs. 11 through 14. Fig. 13 shows the straight line linkage 100 in a position rotated slightly upwards from neutral, and Fig. 14 shows the straight line linkage 100 in a downward rotated position. As face plate linkage attachment bracket 120 rotates downward relative to pitch plate linkage mounting bracket 102 at the location of the straight line linkage 100 shown, upper radius link 104 rotates in such a way as to translate its connection with T-link 112 forward, and lower radius link 108 rotates in such a way as to translate its connection with T-link 112 rearward.

The location of upper radius link mounting point 106 on pitch plate linkage mounting bracket 102, the location of lower radius link mounting point 110 on pitch plate linkage mounting bracket 102, the lengths of upper radius link 104 and lower radius link 108, and the geometry of T-link 112, therefore, are such that its connection with face plate linkage attachment bracket 120, as a result of this chosen geometry, moves substantially neither forward nor rearward. Instead, the straight line linkage 100 keeps face plate linkage attachment bracket 120 at an approximately constant distance from pitch plate linkage mounting bracket 102.

It may be appreciated from Figs. 11 through 14 that the straight line linkage 100 articulates substantially within a plane which is shown in a normal view in Figs. 13 and 14. Therefore, T-link 112 at its attachment point with face plate linkage attachment bracket 102 describes an approximately straight line within the plane of face plate 80 at its intersection with the plane of straight line linkage 100. However, face plate 80 rotates about upper face plate pivot axle 82, as shown in Figs. 3 and 4. Straight line linkages 100 are oriented in such a way that the lines described by the connection between T-links 112 and face plate linkage attachment bracket 102 are tangent to a circle about upper face plate pivot axle 82. More specifically, T-links 112 are connected to face plate linkage attachment bracket 102 by way of a linkage axle 118 connected to face plate linkage attachment bracket 102 and a sliding ball joint 116 at the end of T-link 112.

The linkage axle 118 of each such connection is oriented so that its axis passes through the axis of upper face plate pivot axle 82. The sliding ball joint 116 at the end of each T-link 112 is oriented so that it is in an neutral position when the face plate is level. As a result, when face plate 80 tilts, the point of connection between T-link 112 and face plate linkage attachment bracket 120 does not follow the arc described by the face plate 80 precisely, but rotates slightly within the plane of the straight line linkage 100 and departs on the straight line away from the arc. The relative rotation between face plate linkage attachment bracket 120 and T-link 112 is accommodated by rotation of sliding ball joint 116, and the relative translation from the departure of the arc of rotation from the straight line described by T-link 112 is accommodated by sliding ball joint 116 sliding along linkage axle 118.

Note that the alternative straight line linkage embodiments 200, 300, and 400 shown in Figs. 15A, 15B, and 15C, respectively, are not shown oriented in such a way that the line described by the connection between their respective straight line links and the header 18 are tangent to a circle about upper face plate pivot axle 82. Rather, for the sake of simplicity of illustration, they are shown normal to the side view. However, it is understood that they are actually to be rotated such that the line described by the connection between their respective straight line links and the header 18 are in fact tangent to a circle about upper face plate pivot axle 82, according to the principle illustrated in the case of the "Roberts mechanism" type of straight line linkage 100 illustrated in Figs. 3 through 14.

## Claims

1. An agricultural harvester (10) comprising a header (18) for gathering a crop and feeding it into a feeder housing (20) of the agricultural harvester (10), the header (18) being connected to the feeder housing (20) by way of a header tilt mechanism (98) for providing the header (18) an ability to tilt relative to the feeder housing (20) in order to follow ground contours, wherein the header tilt mechanism (98) comprises at least one straight line linkage (100) movably connecting the feeder housing (20) to an attachment bracket (120) on the header (18), and **characterized in that** the at least one straight line linkage (100) is one of a "Robert's mechanism" (100), a "Watt's linkage", (200), a "Chebyshev linkage" (300), and a "Peaucellier-Lipkin linkage" (400).

2. The agricultural harvester (10) of claim 1, the header tilt mechanism (98) further comprising an upper pivot (82) located near the top and center of the front of the feeder housing (20) on which the header (18) pivots;
the at least one straight line linkage (100) being located in a lower corner of the front of the feeder housing (20) and movably connecting the header (18) to the lower corner of the front of the feeder housing (20).

3. The agricultural harvester (10) of claims 1-2, wherein the at least one straight line linkage (100) has a first radius link (104), a second radius link (108), and a T-link (112).

4. The agricultural harvester (10) of claim 3, wherein the first radius link (104) and second radius link (108) are connected to the feeder housing (20) and the T-link (112) is connected to the header (18).

5. The agricultural harvester (10) of claim 4, wherein the connection of the first radius link (104) and the second radius link (108) to the feeder housing (20) comprises a pitch plate linkage mounting bracket (102), the T-link (112) passing through a slot (114) in the pitch plate linkage mounting bracket (102) for connecting to the header (18).

6. The agricultural harvester (10) of claims 1-5, wherein the header (18) is releasably connected to the header tilt mechanism (98) by way of a face plate (80).

7. The agricultural harvester (10) of claims 1-6, wherein the connection between the at least one straight line linkage (100) and the header (18) comprises a sliding ball joint (116).

8. The agricultural harvester (10) of claim 7, wherein:
the header tilt mechanism (98) includes an upper pivot (82) located near the top and center of the front of the feeder housing (20) on which the face plate (80) pivots; and
the sliding ball joint (116) slides along a linkage axle (118), the linkage axle (118) having an axis that intersects the axis of the upper pivot (82).

9. The agricultural harvester (10) of claim 8, wherein:
the connection between the at least one straight line linkage (100) and the header (18) describes a straight line upon articulation of the at least one straight line linkage (100), the straight line being tangential to a circle centered around the upper pivot (82).

10. The agricultural harvester (10) of claims 1-8, wherein the header tilt mechanism (98) further comprises at least one hydraulic tilt cylinder (122).

11. The agricultural harvester (10) of claim 10, wherein the at least one hydraulic tilt cylinder (122) of the header tilt mechanism (98) is provided with a pressure controlling or limiting arrangement (126).

12. The agricultural harvester (10) of claim 11, wherein the pressure controlling or limiting arrangement (126) further comprises a hydraulic pressure accumulator.

13. The agricultural harvester (10) of claims 1-12, wherein the header (18) is further provided with gauge wheels (96).

14. The agricultural harvester (10) of claims 1-13, wherein the feeder housing (20) is further provided with at least one heave cylinder (72), the at least one heave cylinder (72) being provided with a pressure controlling or limiting arrangement (124).

## Patentansprüche

1. Landwirtschaftliche Erntemaschine (10) mit einem Vorsatz (18) zum Sammeln von Erntegut und Zuführen desselben in ein Förderergehäuse (20) der landwirtschaftlichen Erntemaschine (10), wobei der Vorsatz (18) mit dem Förderergehäuse (20) mittels eines Vorsatzneigungsmechanismus (98) verbunden ist, der es dem Vorsatz (18) ermöglicht, sich relativ zum Förderergehäuse (20) zu neigen bzw. zu kippen, um dem Bodenprofil zu folgen, wobei der Vorsatzneigungsmechanismus (98) zumindest einen geradlinigen Mechanismus (100) umfasst, der das Förderergehäuse (20) beweglich mit einer Befestigungshalterung (120) am Vorsatz (18) verbindet, und **dadurch gekennzeichnet ist, dass** der zumindest eine geradlinige Mechanismus (100) ein "Robert-Mechanismus" (100), ein "Watt-Mechanismus" (200), ein "Tschebyschow-Mechanismus" (300) oder ein "Peaucellier-Lipkin-Mechanismus" (400) ist.

2. Landwirtschaftliche Erntemaschine (10) nach Anspruch 1, wobei der Vorsatzneigungsmechanismus (98) weiterhin eine obere Drehachse (82) umfasst, die nahe der Oberseite und der Mitte der Vorderseite des Förderergehäuses (20) angeordnet ist, an dem der Vorsatz (18) schwenkt;
wobei der zumindest eine geradlinige Mechanismus (100) in einer unteren Ecke der Vorderseite des Förderergehäuses (20) angeordnet ist und den Vorsatz (18) beweglich mit der unteren Ecke der Vorderseite des Förderergehäuses (20) verbindet.

3. Landwirtschaftliche Erntemaschine (10) nach den Ansprüchen 1 bis 2, wobei der zumindest eine geradlinige Mechanismus (100) ein erstes radiales Bindeglied (104), ein zweites radiales Bindeglied (108) und ein T-Bindeglied (112) aufweist.

4. Landwirtschaftliche Erntemaschine (10) nach Anspruch 3, wobei das erste radiale Bindeglied (104) und das zweite radiale Bindeglied (108) mit dem Förderergehäuse (20) verbunden sind und das T-Bindeglied (112) mit dem Vorsatz (18) verbunden ist.

5. Landwirtschaftliche Erntemaschine (10) nach Anspruch 4, wobei die Verbindung des ersten radialen Bindeglieds (104) und des zweiten radialen Bindeglieds (108) mit dem Förderergehäuse (20) eine Befestigungshalterung (102) zum Verbinden der Neigungsplatte umfasst, wobei sich das T-Bindeglied (112) zum Verbinden mit dem Vorsatz (18) durch einen Spalt (114) in der Befestigungshalterung (102) zum Verbinden der Neigungsplatte hindurch erstreckt.

6. Landwirtschaftliche Erntemaschine (10) nach den Ansprüchen 1 bis 5, wobei der Vorsatz (18) mittels einer Frontplatte (80) lösbar mit dem Vorsatzneigungsmechanismus (98) verbunden ist.

7. Landwirtschaftliche Erntemaschine (10) nach den Ansprüchen 1 bis 6, wobei die Verbindung zwischen dem zumindest einen geradlinigen Mechanismus (100) und dem Vorsatz (18) ein verschiebbares Pendelkugellager (116) umfasst.

8. Landwirtschaftliche Erntemaschine (10) nach Anspruch 7, wobei:
der Vorsatzneigungsmechanismus (98) eine obere Drehachse (82) aufweist, die nahe der Oberseite und der Mitte der Vorderseite des Förderergehäuses (20) angeordnet ist, an dem die Frontplatte (80) schwenkt; und
das verschiebbare Pendelkugellager (116) entlang einer Verbindungsachse (118) gleitet, wobei die Verbindungsachse (118) eine Achse aufweist, die die Achse der oberen Drehachse (82) schneidet.

9. Landwirtschaftliche Erntemaschine (10) nach Anspruch 8, wobei:
die Verbindung zwischen dem zumindest einen geradlinigen Mechanismus (100) und dem Vorsatz (18) nach dem gelenkigen Verbinden des zumindest einen geradlinigen Mechanismus (100) eine gerade Linie beschreibt, wobei die gerade Linie tangential zu einem Kreis ist, der um die Drehachse (82) zentriert ist.

10. Landwirtschaftliche Erntemaschine (10) nach den Ansprüchen 1 bis 8, wobei der Vorsatzneigungsmechanismus (98) weiterhin zumindest einen hydraulischen Neigungszylinder (122) umfasst.

11. Landwirtschaftliche Erntemaschine (10) nach Anspruch 10, wobei der zumindest eine hydraulische Neigungszylinder (122) des Vorsatzneigungsmechanismus (98) mit einer Drucksteuerungs- oder Druckbegrenzungsanordnung (126) ausgestattet ist.

12. Landwirtschaftliche Erntemaschine (10) nach Anspruch 11, wobei die Drucksteuerungs- oder Druckbegrenzungsanordnung (126) weiterhin einen hydraulischen Druckspeicher umfasst.

13. Landwirtschaftliche Erntemaschine (10) nach den Ansprüchen 1 bis 12, wobei der Vorsatz (18) weiterhin mit Spurrädern (96) ausgestattet ist.

14. Landwirtschaftliche Erntemaschine (10) nach den Ansprüchen 1 bis 13, wobei das Förderergehäuse (20) weiterhin mit zumindest einem Hebezylinder (72) ausgestattet ist, wobei der zumindest eine Hebezylinder (72) mit einer Drucksteuerungs- oder Druckbegrenzungsanordnung (124) ausgestattet ist.

## Revendications

1. Moissonneuse agricole (10) comprenant une table de coupe (18) pour le rassemblement d'un produit de récolte agricole et son alimentation dans un carter d'alimentation (20) de la moissonneuse-agricole (10), la table de coupe (18) étant reliée au carter d'alimentation (20) au moyen d'un mécanisme de soulèvement de la table de coupe (98) pour conférer à la table de coupe (18) une capacité de soulèvement par rapport au carter d'alimentation (20) de manière à suivre les contours du terrain, dans laquelle le mécanisme de soulèvement de la table de coupe (98) comprend au moins une liaison en ligne droite (100) reliant de manière mobile le carter d'alimentation (20) à une console de fixation (120) sur la table de coupe (18) et **caractérisée en ce que** la au moins une liaison en ligne droite (100) est soit un « mécanisme de Robert » (100), une « liaison de Watt » (200), un « cheval de Chebyshev » (300) et une « dispositif de Peaucellier-Lipkin » (400).

2. Moissonneuse agricole (10) selon la revendication 1, le mécanisme de soulèvement de la table de coupe (98) comprenant en outre un pivot supérieur (82) situé à proximité du sommet et du centre de l'avant du carter d'alimentation (20) sur lequel la table de coupe pivote ;
la au moins une liaison en ligne droite (100) étant située dans un angle inférieur de l'avant du carter d'alimentation (20) et reliant de manière mobile la table de coupe (18) au coin inférieur de l'avant du carter d'alimentation (20).

3. Moissonneuse agricole (10) selon les revendications 1-2, dans laquelle la au moins une liaison en ligne droite (100) possède une première biellette de rayon (104), une seconde biellette de rayon (108), et une biellette en T (112).

4. Moissonneuse agricole (10) selon la revendication 3, dans laquelle la première biellette de rayon (104) et la seconde biellette de rayon (108) sont reliées au carter d'alimentation (20), la biellette en T (112) étant reliée à la table de coupe (18).

5. Moissonneuse agricole (10) selon la revendication 4, dans laquelle la connexion de la première biellette de rayon (104) et de la seconde biellette de rayon (108) au carter d'alimentation (20) comprend une console de montage à liaison de plaque primitive (102), la biellette en T (112) passant par une fente (114) dans la console de montage à liaison de plaque primitive (102) pour sa liaison à la table de coupe (18).

6. Moissonneuse agricole (10) selon les revendications 1-5, dans laquelle la table de coupe (18) est connectée à libération au mécanisme de soulèvement de la table de coupe (98) au moyen d'une plaque faciale (80).

7. Moissonneuse agricole (10) selon les revendications 1-6, dans laquelle la connexion entre la au moins une liaison en ligne droite (100) et la table de coupe (18) comprend une rotule coulissante (116).

8. Moissonneuse agricole (10) selon la revendication 7, dans laquelle :
le mécanisme de soulèvement de la table de coupe (98) comprend un pivot supérieur (82) disposé à proximité du sommet et du centre de l'avant du carter d'alimentation (20) sur lequel la plaque faciale (80) pivote ; et
la rotule coulissante (116) coulisse le long d'un axe de liaison (118), l'axe de liaison (118) possédant un axe qui coupe l'axe du pivot supérieur (82).

9. Moissonneuse agricole (10) selon la revendication 8, dans laquelle :
la connexion entre la au moins une liaison en ligne droite (100) et la table de coupe (18) décrit une ligne droite sur l'articulation de la au moins une liaison en ligne droite (100), la ligne droite étant tangentielle à un cercle ayant pour centre le pivot supérieur (82).

10. Moissonneuse agricole (10) selon les revendications 1-8, dans laquelle le mécanisme de soulèvement de la table de coupe (98) comprend en outre au moins un cylindre de soulèvement hydraulique (122).

11. Moissonneuse agricole (10) selon la revendication 10, dans laquelle le au moins un cylindre de soulèvement hydraulique (122) du mécanisme de soulèvement de la table de coupe (98) est dotée d'un dispositif de commande ou de limitation de la pression (126).

12. Moissonneuse agricole (10) selon la revendication 11, dans laquelle le dispositif de commande ou de limitation de la pression (126) comprend en outre un accumulateur de pression hydraulique.

13. Moissonneuse agricole (10) selon les revendications 1-12, dans laquelle la table de coupe (18) est en outre dotée de roues calibreuses (96).

14. Moissonneuse agricole (10) selon les revendications 1-13, dans laquelle le carter d'alimentation (20) comprend en outre au moins un cylindre d'abattage (72), le au moins un cylindre d'abattage étant doté d'un dispositif de commande ou de limitation de la pression (124).
